# EUROPEAN PATENT SPECIFICATION

(11) **EP 3 647 113 B1**
(45) Date of publication and mention of the grant of the patent: **13.04.2022**
(21) Application number: 18203159.1
(22) Date of filing: 29.10.2018
(51) Int. Cl.: B60Q 1/072

(54) **LIGHTING DEVICE FOR VEHICLE WITH OPTICAL AXIS ADJUSTMENT**
BELEUCHTUNGSVORRICHTUNG FÜR FAHRZEUG MIT EINSTELLUNG DER OPTISCHEN ACHSE
DISPOSITIF D'ÉCLAIRAGE POUR VÉHICULE À RÉGLAGE DE L'AXE OPTIQUE

(43) Date of publication of application: 06.05.2020
(73) Proprietor: Valeo Vision, 93012 Bobigny Cedex (FR)
(72) Inventor: HONNET, Nicolas, 49000 ANGERS (FR); GEORGE, Pierrick, 49000 ANGERS (FR); BAKACHA, Malik, 49000 ANGERS (FR)
(74) Representative: Valeo Visibility

(56) References cited:
- EP-A1- 2 186 679
- EP-A2- 2 803 529
- WO-A1-2010/124646
- US-A1- 2015 117 042

## Description

### TECHNICAL FIELD

The present invention relates to a lighting device for an automotive vehicle, and more particularly to a lighting device for an automotive vehicle, with an optical axis adjustment mechanism.

### STATE OF THE ART

Lighting devices are used in automotive vehicles and the like, for lighting the path ahead. These lighting devices need to be oriented properly to provide adequate lighting to the driver of the automotive vehicle under various driving conditions and at the same time avoid dazzling the driver and passenger of vehicles coming from opposite direction. Currently, lighting devices are available with multiple optical modules. The optical modules are assembled into a hollow support of a lighting device by means of connection points, and the optical modules are movable relative to the hollow support to aim and/or correct the orientation, in particular vertically as well as in azimuth or horizontally.

Conventionally, to adjust the optical axis of the optical modules of the lighting devices, various leveling systems or levelers are provided. The leveling systems move or rotate the optical modules along the axis of rotation as per the requirements. Further, it is required that each of the optical module inside a headlight assembly be provided with individual optical axis adjustment systems. This makes the process cumbersome and involves various levelers for each module, performing independent adjustment of the modules. This may cause difference in optical axis adjustment of different optical modules. Hence, there is a need for optical axis adjustment system, capable of simultaneous adjustment.

There are system which perform simultaneous optical axis adjustment as disclosed in EP 1 391 347 B1. The patent discloses low beam and high beam adjustment, about the vertical and horizontal axis. The patent additionally discloses a coupling element, essentially a rod like member connecting the low beam module and the high beam module, to perform simultaneous adjustment. The provision of rod like member makes the system rigid and inflexible in nature. Also, the rod like member has its limitation where there is a space constraint or where the distance between the modules is considerably more for example the modern headlight assembly with a narrow and elongated profile, and can cause assembly issues and interfere with other elements in the optical device.

It is desirable to have a single access system capable of performing simultaneous optical axis adjustment. In this regard, the prior arts and the conventional methods have various disadvantages as described earlier and there is a need for an optical axis adjustment system which can overcome the above limitations and provide an effective system for optical axis adjustment.

US 2015/0117042 A1 discloses a lighting assembly comprising a plurality of optical modules comprising each an optical adjustment device, wherein the optical adjustment devices are operably connected in series through drive shafts in order that the orientation of the optical modules can be synchronously adjusted.

### SUMMARY OF THE INVENTION

An object of the present invention is to solve at least partially the disadvantages described above of known lighting devices. In particular, it is the object of the present invention to provide a lighting device, with a system for performing optical axis adjustment of the optical modules.

Another object of the invention is to provide a lighting device with a simultaneous optical axis adjustment system.

Another object of the invention is to provide a lighting device with an optical axis adjustment with a single externally accessible device for simultaneous optical axis adjustment of the optical modules.

According to the present invention, there is provided a lighting device for an automotive vehicle, comprising the features as defined in claim 1.

In an embodiment, the optical modules are assembled inside the hollow support by means of securing means and securing plates. The optical modules are assembled such that each of them have independent axis of rotations. Furthermore, the lighting device comprises an optical axis adjustment system having flexible cables, transfer module, leveling modules and additionally an external aiming module.

In an embodiment, the transfer module is placed between the aiming module and leveling modules, and is in constant engagement with the leveling modules by means of flexible cables.

In an embodiment, the flexible cables are assembled to form a workable engagement angle with the leveling modules and additionally also with aiming module.

In an embodiment of the present invention, the leveling modules are connected to dynamic levelers.

According to non-limiting embodiments, the lighting device can also have one or more of the following additional features:
According to one non-limiting embodiment, said at least one first leveling module of the at least one first optical module comprises a leveling means with an engagement wheel
According to one non-limiting embodiment, said at least one first leveling module is attached to a securing means.

According to one non-limiting embodiment, said leveling means is connected to a secondary transfer cable by means of the engagement wheel.

According to one non-limiting embodiment, said at least one first leveling module of the at least one first optical module and said at least one second leveling module of the at least one second optical module comprise each a leveling means and a secondary transfer cable

According to one non-limiting embodiment, each eveling module is attached to a securing means.

According to one non-limiting embodiment, said secondary transfer cables are assembled between the transfer module and the leveling means.

According to one non-limiting embodiment, said primary transfer cable and/ or secondary transfer cables are flexible.

According to one non-limiting embodiment, said primary transfer cable and/ or secondary transfer cables rotate along their respective axis of cylinder.

According to one non-limiting embodiment, a guide channel is provided for routing the primary transfer cable and/ or the secondary transfer cables on a securing plate and/or the hollow support.

According to one non-limiting embodiment, said transfer module comprises a sprocket wheel in constant engagement with the primary transfer cable and the secondary transfer cables of the at least one first leveling module and the at least one second leveling module.

According to one non-limiting embodiment, said leveling means and secondary transfer cables are assembled to form an angle of engagement.

According to one non-limiting embodiment, said leveling means is directly attached to the securing means to perform optical axis adjustment.

According to one non-limiting embodiment, said leveling means is coupled with a dynamic leveler to perform optical axis adjustment.

According to one non-limiting embodiment, said primary transfer cable is provided with an external aiming module on the hollow support panel or the like. According to one non-limiting embodiment, said aiming module comprises engagement wheel having engagement teeth.

According to one non-limiting embodiment, said transfer module and/or said leveling means are tightly packed by a crimping plate.

According to one non-limiting embodiment, said aiming module and said transfer cable are engaged in a manner to form a working angle between them.

According to one non-limiting embodiment, said securing means and/or said securing plate is a bracket system comprising mounting and fastening provision. According to one non-limiting embodiment, said optical adjustment system is for simultaneous optical axis adjustment of the at least one first optical module and the at least one second optical module of the lighting device.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Figure 1 shows a perspective view of a lighting device comprising a first optical module and a second assembled in hollow support.
Figure 2 shows a perspective view of the lighting device of figure 1 without the hollow support, according to an embodiment of the present invention.
Figure 3 shows an enlarged view of the lighting device with an optical axis adjustment system shown in Figure 2.
Figure 4a shows a primary transfer cable accessible from outside of the hollow support, according to an embodiment of the present invention.
Figure 4b shows a primary transfer cable along with an aiming module assembly, according to another embodiment of the present invention.
Figure 5a shows a leveling module attached to the securing means of the lighting device. The figure further shows the connection between the securing means and securing plate, according to an embodiment of the present invention.
Figure 5b shows a leveling module and a dynamic leveler assembly of Figure 5a without the securing plates.
Figure 6 shows the optical axis adjustment system of Figure 2 with a crimping plate.

### DETAILED DESCRIPTION OF THE INVENTION

Hereinafter, embodiments of the present invention will be described with reference to the accompanying drawings.

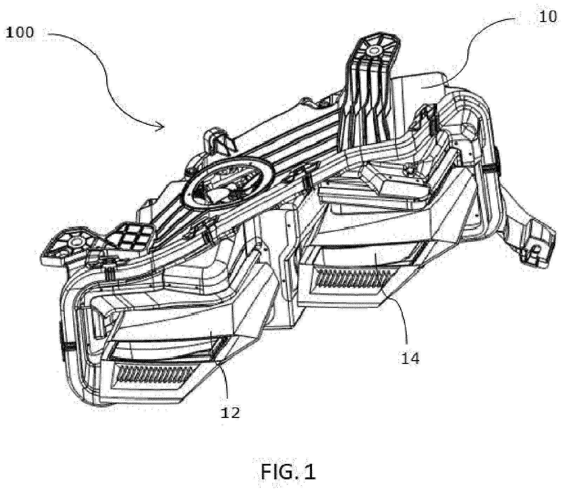

Figure 1 shows a perspective view of a lighting device comprising two optical modules assembled inside hollow support, according to an embodiment of the present invention.

According to an embodiment of the present subject matter, the lighting device (100) shown in Figure 1 comprises a hollow support (10) and a first optical module (12) and a second optical module (14) for lighting the path ahead of the vehicle. The first optical module (12) and the second optical module (14) can be assigned with different lighting functions such as low beam light, high beam light and/or fog light, and are required to provide a specific lighting pattern. The lighting pattern of the lighting devices is regulated by various statutory regulations. Also it is required, in principle, that the optical axis of the lighting device is always maintained at optimal angle with respect to the horizontal plane, which is determined as the road surface in relation to the automotive vehicle on which the light device is installed in standard position. To maintain the requirement of the optical axis, the lighting device (100) of the present subject matter is provided an optical axis adjustment system.

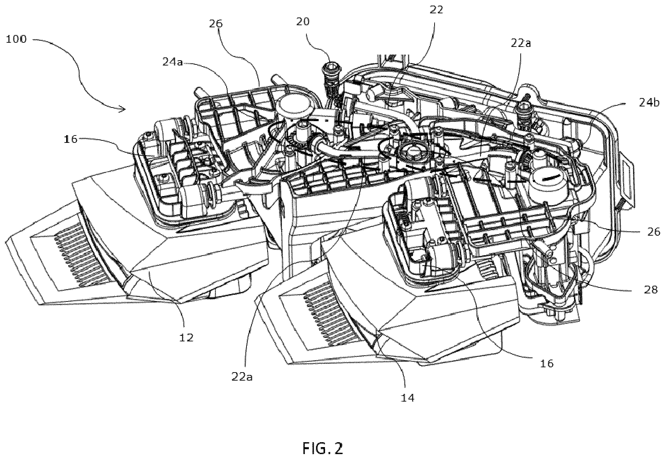

Figure 2 shows a perspective view of a lighting device comprising a first optical module (12) and a second optical module (14) along with an optical axis adjustment system, according to an embodiment of the present invention. As shown in Figure 2, the optical axis adjustment system in accordance with an embodiment of the present invention comprises a first leveling module (24a) and second leveling module (24b) (shown inside dotted lines for clarity), a transfer module (28) and primary transfer cable (22) accessible from the outside of the hollow support. The first optical module (12) and the second optical module (14) are movable relative to the hollow support (10) (as shown in Figure 1) of the lighting device to aim and/or correct the axis of the lighting device, in particular vertically as well as in azimuth or horizontally. The first optical module (12) and the second optical module (14) are connected to a securing means (16); the securing means are further connected to a securing plate (26). The securing plate (26) additionally also supports the first leveling module (24a) and the second leveling module (24b). As shown in the figure, the first leveling module (24a) and the second leveling module (24b) are in constant engagement with a transfer module (28).

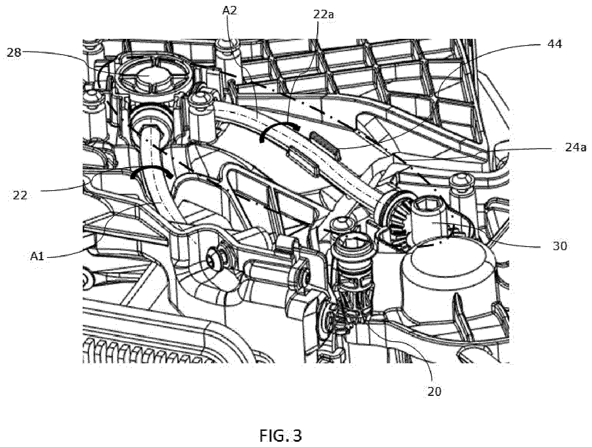

Figure 3 shows an embodiment of the present invention, wherein the working relationship between the primary transfer cable (22) and the leveling modules (24a, 24b) is depicted (only one leveling module is being depicted for clarity and this in no way restricts the scope of the present invention). As shown in the Figure 3, the leveling module (24a) further comprises a leveling means (30) and a secondary transfer cable (22a). The Figure 3, additionally, shows a transfer module (28) which is in constant engagement with the primary transfer cable (22) and the secondary transfer cable (22a) of the leveling module (24a). The primary transfer cable (22) and the secondary transfer cable (22a) are both flexible in nature and are rotatable along the axis of the cylinder (A1, A2). The primary transfer cable (22) comprises an engagement wheel at the trailing end, whereas the secondary transfer cable (22a) comprises engagement wheels at both the ends.

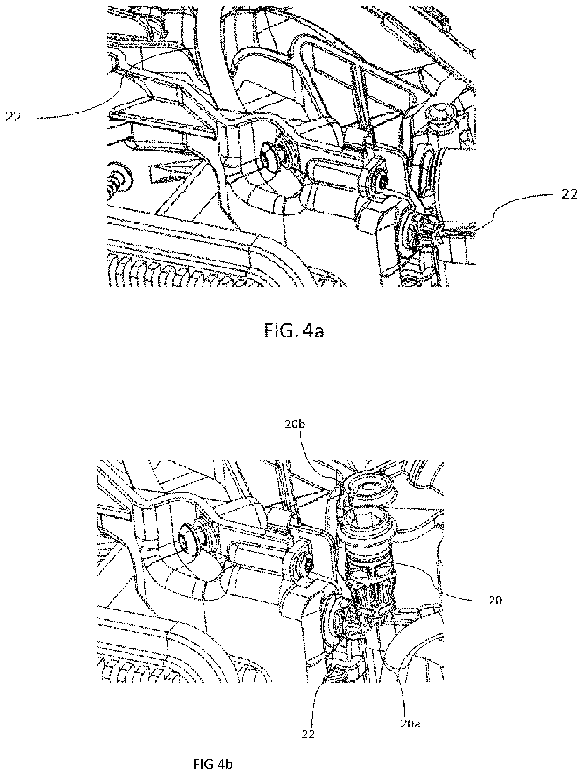

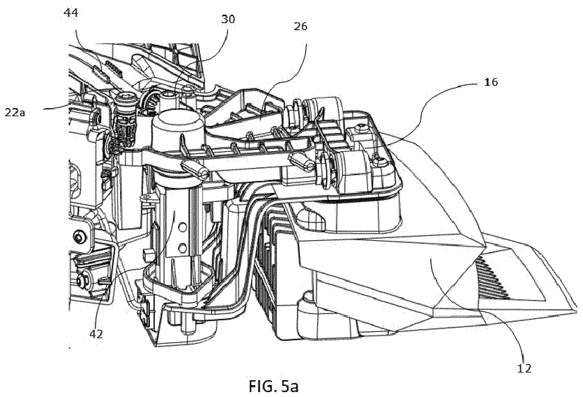

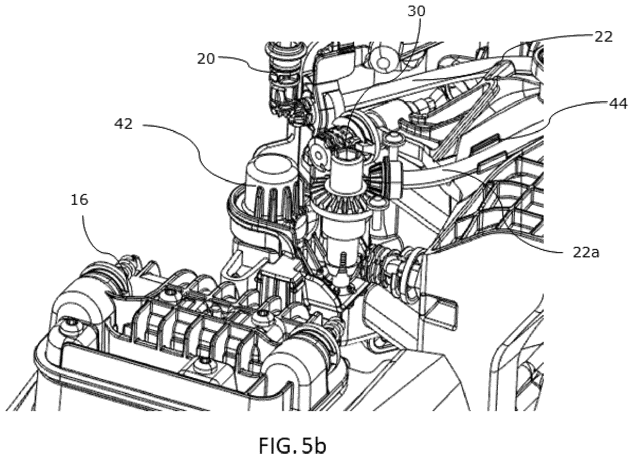

Figure 4a and 4b respectively show a primary transfer cable (22) accessible from outside the hollow support directly as well as through an aiming module. The aiming module (20) as shown in Figure 4b comprises engagement wheel (20a) which is in engagement with the primary transfer cable (22). Figure 5a shows a leveling means (30) attached to the securing means (16) and Figure 5b further depicts the leveling means (30) and the secondary transfer cable (22a) in relation to the securing means, according to an embodiment of the invention. In accordance with an embodiment of the present invention and as shown in Figure 4a, the primary transfer cable (22) can be directly accessed from outside of the hollow support. The end accessible outside of the hollow support of primary transfer cable has provisions for gripping and/or engagement, such as slotted head, allen key head, hex drive head, socket head, ribbed gripping head or the likes. According to another embodiment of the invention and as shown in Figure 4b, the primary provided transfer cable (22) is provided with an aiming module (20) for easy accessibility. The aiming module (20) has similar provisions as the primary transfer cable (22) for gripping and/or engagement. In accordance with the present invention, the primary transfer cable (22) accessible from outside of the hollow support is used to perform the optical axis adjustment of the at least the first optical module (12), and the at least second optical module (14). The system as per the embodiment of the present invention requires only a single adjustment means accessible from outside of the hollow support.

As shown in Figure 3, the accessible part of primary transfer cable (22) is rotated along the axis of the cylinder (A1). The trailing part of the primary transfer cable (22) engages with the transfer module (28). The transfer module comprises a sprocket wheel (not shown in figures), the sprocket wheel which is in constant engagement with the engagement wheel of the primary transfer cable (22) and engagement wheel of secondary transfer cables (22a) of the leveling modules (24a, 24b). The transfer module (28) transfers the rotational motion of the primary transfer cable (22) to the secondary transfer cables (22a). The secondary transfer cable (22a) rotatable along its own axis of cylinder (A2) transfers the rotational motion to the leveling means (30). The leveling means (30) comprises a rotary to linear conversion mechanism (not shown) to translate the rotational motion to vertical movement. The conversion mechanism of the leveling means (30) can be a worm gear arrangement, rack and pinion arrangement or the combination of the likes. Many other rotary to linear conversion mechanism can be used to achieve the same result and the above are stated as examples and not restricting the scope of the present invention. The secondary transfer cable (22a) and the leveling means (30) as per the present invention are engaged to form a working angle between them ranging from 60 degrees to 120 degrees, preferably 90 degrees. Additionally as shown in the Figure 3 the secondary transfer cable (22a) are routed through guide channels (44) provided on the securing plate (26).

Figure 5a shows the leveling means (30) connected to the securing means (16) through a dynamic leveler (42). The Figure further shows the arrangement of the optical module (12) on the securing means (16). The first optical module (12) and the second optical (14) are each connected on individual securing means (16) characterizing independent axis rotation. The securing means (16) is arranged on the securing plate (26) such that the securing means is free to rotate about their axis of rotation. The movement of the securing means (16) with respect to the hollow support (10) by means of the securing plate (26) activates the optical axis adjustment of the first optical module (12) and the second optical module (14). Figure 5b shows the leveling means (30) directly connected to the dynamic leveler (42) in relation to the securing means (16). The figure further shows the engagement between the secondary transfer cable (22a) and the leveling means (30).

In accordance with the present invention, the vertical movement of the leveling means (30) with or without the dynamic leveler causes the first optical module (12) and the second optical module (14) connected on the securing means (16) to rotate about their respective axis of rotation. As per the embodiment of the invention, the rotation of the externally accessible primary transfer cable (22) rotates the first optical module (12) and the second optical module (14) about their respective axis of rotation, through the transfer module (28). The transfer module (28) is in constant engagement with the secondary transfer cables (22a) of each leveling modules (24a, 24b), thus providing simultaneous optical axis adjustment of the first optical module (12) and the second optical module (14) of the lighting device (100). This helps in maintain the uniformity of optical axis adjustment and the beam pattern.

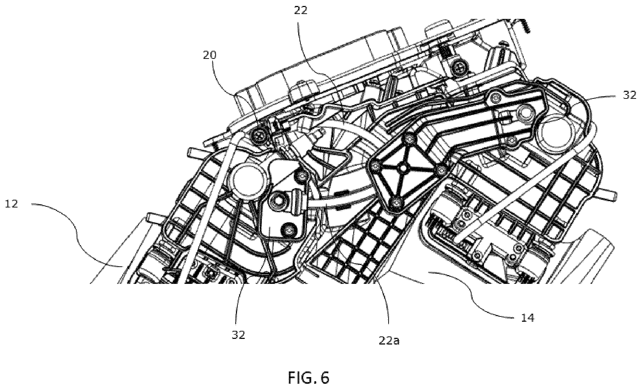

Figure 6 shows crimping plates (32) assembled on top of each of the leveling modules (24). The crimping plates hold all the sub components namely the transfer module (28), the first leveling module (24a) and the second leveling module (24b) tightly together. This prevents interfere of elements in the optical device and ensures proper engagement at all times.

Further the secondary transfer cables (22a) of the first leveling modules (24a) and the second leveling module (24b) as shown in Figure 2 and 3 can be replaced with a belt drive or similar mechanism without deviating from the scope of the current invention.

The present invention is briefed based on an embodiment having two optical modules. But, it is well within the scope of the present invention wherein the optical axis adjustment system can be adapted to work with lighting systems having more than two optical modules. The lighting device with more than two optical modules are provided by equal number of leveling modules each comprising secondary transfer cable (22a) and leveling means (30). Each optical module is connected to a levelling module. The secondary transfer cable (22a) is assembled between the transfer module (28) and the leveling means (30) to aim and/ or correct the optical axis of the lighting device with more than two optical modules.

In an example which is not part of the present invention, the system can be adapted to a lighting device comprising one optical module (12) requiring flexible system for optical axis adjustment, wherein the traditional methods and system are unable to work efficiently due to packaging issues, or are difficult to access. For such a lighting device, the optical axis adjustment will comprise a primary flexible cable (22) accessible from outside of the hollow support and a leveling means (30). The primary transfer cable is optionally routed by means of guide channels along the hollow support and/or support plate, and/or directly connected to the leveling means (30) at work engagement angle.

## Claims

1. A lighting device (100) for an automotive vehicle comprising a hollow support (10);
at least one first optical module (12) and at least one second optical module (14), each characterizing an independent axis of rotation;
an optical axis adjustment system housed inside the hollow support (10) for adjusting the optical axis of the at least one first optical module (12) and the at least one second optical module, the optical axis adjustment system comprising
a primary transfer cable (22) accessible from outside of the hollow support, and the primary transfer cable having an engagement wheel at the trailing end;
at least one first leveling module (24a) for adjusting the at least one first optical module (12) about its axis of rotation and at least one second leveling module (24b) for adjusting the at least one second optical module (14) about its respective axis of rotation;
**characterised in that** the optical axis adjustment system further comprises a transfer module (28) communicating with the primary transfer cable (22), the at least one first leveling module (24a) of the at least one first optical module (12) and the at least one second leveling module (24b) of the at least one second optical module (14).

2. The lighting device as claimed in claim 1, wherein the at least one first leveling module (24a) of the at least one first optical module (12) comprises a leveling means (30) with an engagement wheel, and wherein the at least one first leveling module is attached to a securing means (16).

3. The lighting device as claimed in claim 2, wherein the leveling means (30) is connected to a secondary transfer cable (22a) by means of the engagement wheel of the levelling means (30).

4. The lighting device as claimed in claim 1, wherein the at least one first leveling module (24a) of the at least one first optical module (12) and the at least one second leveling module (24b) of the at least one second optical module (14) comprise each a leveling means (30) and a secondary transfer cable (22a), and wherein each leveling module is attached to a securing means (16).

5. The lighting device as claimed in claim 4, wherein the secondary transfer cables (22a) are assembled between the transfer module (28) and the leveling means (30).

6. The lighting device as claimed in any of claim 4 or 5, wherein the primary transfer cable (22) and/ or secondary transfer cables (22a) are flexible and rotate along their respective axis of cylinder (A1, A2).

7. The lighting device as claimed in any of claim 4 to 6, wherein a guide channel (44) is provided for routing the primary transfer cable (22) and/ or the secondary transfer cables (22a) on a securing plate (26).

8. The lighting device as claimed in any of claim 4 to 7, wherein the transfer module (28) comprises a sprocket wheel in constant engagement with the primary transfer cable (22) and the secondary transfer cables (22a) of the at least one first leveling module (24a) and the at least one second leveling module (24b).

9. The lighting device as claimed in any of claim 3 or 4 to 8, wherein the leveling means (30) and the secondary transfer cables (22a) are assembled to form an angle of engagement.

10. The lighting device as claimed in any of preceding claims , wherein the primary transfer cable (22) is provided with an external aiming module (20) on the hollow support panel, and wherein the aiming module (20) comprises an engagement wheel having engagement teeth.

11. The lighting device as claimed in any of claim 2 or 4 to 9, wherein the transfer module (28) and/or the leveling means (30) are tightly packed by a crimping plate (32).

12. The lighting device as claimed in any of claim 10, wherein the aiming module (20) and the transfer cable (22) are engaged in a manner to form a working angle between them.

13. The lighting device as claimed in any of the preceding claims, wherein the optical adjustment system is for simultaneous optical axis adjustment of the at least one first optical module (12) and the at least one second optical module (14) of the lighting device.

## Patentansprüche

1. Beleuchtungsvorrichtung (100) für ein Kraftfahrzeug, umfassend
einen hohlen Träger (10);
mindestens ein erstes optisches Modul (12) und mindestens ein zweites optisches Modul (14), die jeweils eine unabhängige Drehachse beschreiben;
ein optisches Achseneinstellsystem, das in dem hohlen Träger (10) zum Einstellen der optischen Achse des mindestens einen ersten optischen Moduls (12) und des mindestens einen zweiten optischen Moduls aufgenommen ist, wobei das optische Achseneinstellsystem umfasst
ein primäres Übertragungskabel (22), das von außerhalb des hohlen Trägers zugänglich ist, und wobei das primäre Übertragungskabel ein Eingriffsrad am hinteren Ende aufweist;
mindestens ein erstes Höhenregelungsmodul (24a) zum Einstellen des mindestens einen ersten optischen Moduls (12) um seine Drehachse und mindestens ein zweites Höhenregelungsmodul (24b) zum Einstellen des mindestens einen zweiten optischen Moduls (14) um seine jeweilige Drehachse;
**dadurch gekennzeichnet, dass** das optische Achseneinstellsystem ferner ein Übertragungsmodul (28) umfasst, das mit dem primären Übertragungskabel (22), dem mindestens einen ersten Höhenregelungsmodul (24a) des mindestens einen ersten optischen Moduls (12) und dem mindestens einen zweiten Höhenregelungsmodul (24b) des mindestens einen zweiten optischen Moduls (14) in Verbindung steht.

2. Beleuchtungsvorrichtung nach Anspruch 1, wobei das mindestens eine erste Höhenregelungsmodul (24a) des mindestens einen ersten optischen Moduls (12) ein Höhenregelungsmittel (30) mit einem Eingriffsrad umfasst, und wobei das mindestens eine erste Höhenregelungsmodul an einem Befestigungsmittel (16) angebracht ist.

3. Beleuchtungsvorrichtung nach Anspruch 2, wobei das Höhenregelungsmittel (30) mit einem sekundären Übertragungskabel (22a) mittels des Eingriffsrads des Höhenregelungsmittels (30) verbunden ist.

4. Beleuchtungsvorrichtung nach Anspruch 1, wobei das mindestens eine erste Höhenregelungsmodul (24a) des mindestens einen ersten optischen Moduls (12) und das mindestens eine zweite Höhenregelungsmodul (24b) des mindestens einen zweiten optischen Moduls (14) jeweils ein Höhenregelungsmittel (30) und ein sekundäres Übertragungskabel (22a) umfassen, und wobei jedes Höhenregelungsmodul an einem Befestigungsmittel (16) angebracht ist.

5. Beleuchtungsvorrichtung nach Anspruch 4, wobei die sekundären Übertragungskabel (22a) zwischen dem Übertragungsmodul (28) und dem Höhenregelungsmittel (30) montiert sind.

6. Beleuchtungsvorrichtung nach einem von Anspruch 4 oder 5, wobei das primäre Übertragungskabel (22) und/oder die sekundären Übertragungskabel (22a) flexibel sind und sich entlang ihrer jeweiligen Zylinderachse (A1, A2) drehen.

7. Beleuchtungsvorrichtung nach einem von Anspruch 4 bis 6, wobei ein Führungskanal (44) zum Verlegen des primären Übertragungskabels (22) und/oder der sekundären Übertragungskabel (22a) an einer Befestigungsplatte (26) bereitgestellt ist.

8. Beleuchtungsvorrichtung nach einem von Anspruch 4 bis 7, wobei das Übertragungsmodul (28) ein Sprossenrad in dauerhaftem Eingriff mit dem primären Übertragungskabel (22) und den sekundären Übertragungskabeln (22a) des mindestens einen ersten Höhenregelungsmoduls (24a) und des mindestens einen zweiten Höhenregelungsmoduls (24b) umfasst.

9. Beleuchtungsvorrichtung nach einem von Anspruch 3 oder 4 bis 8, wobei das Höhenregelungsmittel (30) und die sekundären Übertragungskabel (22a) so montiert sind, dass sie einen Eingriffswinkel bilden.

10. Beleuchtungsvorrichtung nach einem der vorausgehenden Ansprüche, wobei das primäre Übertragungskabel (22) mit einem externen Ausrichtungsmodul (20) an der hohlen Trägerplatte bereitgestellt ist, und wobei das Ausrichtungsmodul (20) ein Eingriffsrad mit Eingriffszähnen umfasst.

11. Beleuchtungsvorrichtung nach einem von Anspruch 2 oder 4 bis 9, wobei das Übertragungsmodul (28) und/oder das Höhenregelungsmittel (30) durch eine Crimpplatte (32) dichtgepackt sind.

12. Beleuchtungsvorrichtung nach einem von Anspruch 10, wobei das Ausrichtungsmodul (20) und das Übertragungskabel (22) auf eine Weise in Eingriff stehen, dass ein Wirkwinkel zwischen ihnen gebildet ist.

13. Beleuchtungsvorrichtung nach einem der vorausgehenden Ansprüche, wobei das optische Einstellsystem zur gleichzeitigen Einstellung der optischen Achse des mindestens einen ersten optischen Moduls (12) und des mindestens einen zweiten optischen Moduls (14) der Beleuchtungsvorrichtung dient.

## Revendications

1. Dispositif d'éclairage (100) pour un véhicule automobile comprenant
un support creux (10) ;
au moins un premier module optique (12) et au moins un second module optique (14), caractérisant chacun un axe de rotation indépendant ;
un système de réglage d'axe optique logé à l'intérieur du support creux (10) pour régler l'axe optique de l'au moins un premier module optique (12) et de l'au moins un second module optique, le système de réglage d'axe optique comprenant
un câble de transfert principal (22) accessible à partir de l'extérieur du support creux, et le câble de transfert principal ayant une roue de mise en prise au niveau de l'extrémité de fuite ;
au moins un premier module de mise à niveau (24a) pour régler l'au moins un premier module optique (12) autour de son axe de rotation et au moins un second module de mise à niveau (24b) pour régler l'au moins un second module optique (14) autour de son axe de rotation respectif ;
**caractérisé en ce que** le système de réglage d'axe optique comprend en outre un module de transfert (28) communiquant avec le câble de transfert principal (22), l'au moins un premier module de mise à niveau (24a) de l'au moins un premier module optique (12) et l'au moins un second module de mise à niveau (24b) de l'au moins un second module optique (14).

2. Dispositif d'éclairage selon la revendication 1, dans lequel l'au moins un premier module de mise à niveau (24a) de l'au moins un premier module optique (12) comprend un moyen de mise à niveau (30) avec une roue de mise en prise, et dans lequel l'au moins un premier module de mise à niveau est fixé à un moyen de fixation (16).

3. Dispositif d'éclairage selon la revendication 2, dans lequel le moyen de mise à niveau (30) est relié à un câble de transfert secondaire (22a) au moyen de la roue de mise en prise du moyen de mise à niveau (30).

4. Dispositif d'éclairage selon la revendication 1, dans lequel l'au moins un premier module de mise à niveau (24a) de l'au moins un premier module optique (12) et l'au moins un second module de mise à niveau (24b) de l'au moins un second module optique (14) comprennent chacun un moyen de mise à niveau (30) et un câble de transfert secondaire (22a), et dans lequel chaque module de mise à niveau est fixé à un moyen de fixation (16).

5. Dispositif d'éclairage selon la revendication 4, dans lequel les câbles de transfert secondaires (22a) sont assemblés entre le module de transfert (28) et le moyen de mise à niveau (30).

6. Dispositif d'éclairage selon l'une quelconque de la revendication 4 ou 5, dans lequel le câble de transfert principal (22) et/ou les câbles de transfert secondaires (22a) sont flexibles et tournent le long de leur axe de cylindre respectif (A1, A2).

7. Dispositif d'éclairage selon l'une quelconque des revendications 4 à 6, dans lequel un canal de guidage (44) est fourni pour acheminer le câble de transfert principal (22) et/ou les câbles de transfert secondaires (22a) sur une plaque de fixation (26).

8. Dispositif d'éclairage selon l'une quelconque des revendications 4 à 7, dans lequel le module de transfert (28) comprend un pignon en prise constante avec le câble de transfert principal (22) et les câbles de transfert secondaires (22a) de l'au moins un premier module de mise à niveau (24a) et de l'au moins un second module de mise à niveau (24b).

9. Dispositif d'éclairage selon l'une quelconque des revendications 3 ou 4 à 8, dans lequel le moyen de mise à niveau (30) et les câbles de transfert secondaires (22a) sont assemblés pour former un angle de mise en prise.

10. Dispositif d'éclairage selon l'une quelconque des revendications précédentes, dans lequel le câble de transfert principal (22) est pourvu d'un module de visée externe (20) sur le panneau de support creux, et dans lequel le module de visée (20) comprend une roue de mise en prise ayant des dents de mise en prise.

11. Dispositif d'éclairage selon l'une quelconque des revendications 2 ou 4 à 9, dans lequel le module de transfert (28) et/ou le moyen de mise à niveau (30) sont regroupés de manière serrée par une plaque à sertir (32).

12. Dispositif d'éclairage selon l'une quelconque de la revendication 10, dans lequel le module de visée (20) et le câble de transfert (22) sont mis en prise de manière à former un angle de travail entre eux.

13. Dispositif d'éclairage selon l'une quelconque des revendications précédentes, dans lequel le système de réglage optique est destiné au réglage simultané de l'axe optique de l'au moins un premier module optique (12) et de l'au moins un second module optique (14) du dispositif d'éclairage.
